# FASCICULE DE BREVET EUROPEEN

(11) **EP 0 881 173 B1**
(45) Date de publication et mention de la délivrance du brevet: **26.07.2000**
(21) Numéro de dépôt: 98109426.1
(22) Date de dépôt: 25.05.1998
(51) Int. Cl.: B65G 47/244

(54) **Transporteur à rouleaux ou à bande pour transporter et tourner des articles an feuilles ou en plaques de faible masse spécifique**
Rollen- oder Bandförderer zum Transportieren und Drehen von Artikeln niedriger spezifischer Masse
Roller or belt conveyor for transporting and turning articles of low specific mass

(30) Priorité: 30.05.1997 CH 127497
(43) Date de publication de la demande: 02.12.1998
(73) Titulaire: BOBST S.A., 1001 Lausanne (CH)
(72) Inventeur: Morisod, Jean-Bernard, 1029 Villars-Ste-Croix (CH)
(74) Mandataire: Colomb, Claude

(56) Documents cités:
- CH-A- 423 446
- US-A- 3 267 637
- US-A- 4 019 627
- US-A- 4 807 739
- US-A- 5 282 528

## Description

La présente invention se rapporte à un dispositif transporteur à rouleaux ou à bande pour articles en feuilles ou en plaques, de faible masse spécifique, en papier ou en carton notamment, comprenant des moyens pour changer l'orientation de ces articles autour d'axes perpendiculaires auxdites feuilles ou plaques, ainsi qu'à une utilisation de ce dispositif transporteur.

Il est fréquent que des dispositifs transporteurs, notamment dans des processus de fabrication, soient associés à des moyens permettant d'orienter les articles transportés dans une position déterminée. C'est notamment le cas des plieuses colleuses pour la fabrication d'articles d'emballage à partir de découpes de papier ou de carton. Il est en effet très important dans ce type de machines, dans lesquelles les opérations de pliage et de collage se déroulent sur des articles en mouvement, que ces articles se trouvent dans des positions déterminées pour effectuer ces opérations, sous peine d'entraîner des complications importantes au niveau des organes chargés d'exécuter les divers opérations de pliage et de collage.

On a proposé à cet effet un dispositif transporteur pour une machine plieuse colleuse dite à deux coordonnées, dans lequel deux bandes transporteuses sont disposées à 90° l'une de l'autre, un élément de transfert étant interposé au sommet de l'angle entre ces deux bandes transporteuses. Cet élément de transfert est constitué par une bande transporteuse à fonctionnement intermittent qui fait passer successivement les découpes de papier ou de carton d'une bande transporteuse à l'autre. Ce système ne permet pas de travailler en ligne droite et augmente donc sensiblement l'encombrement par rapport à une machine en ligne droite. En outre, la succession des découpes de papier ou de carton doit être régulière étant donné que l'élément de transfert doit être à l'arrêt lors de la mise en place de la découpe de papier ou de carton et ne partir qu'après que cette découpe de papier ou de carton est bien positionnée sur l'élément de transfert.

On a proposé un autre système pour transférer une feuille de papier ou de carton entre deux bandes transporteuses disposées en équerre dans le US-5,282,528. Dans cette solution, l'élément de transfert est constitué par deux bandes transporteuses adjacentes orientées selon une diagonale reliant les deux bandes transporteuses perpendiculaires l'une à l'autre. Les articles à transférer sont déplacés le long de cette section de transfert à une vitesse supérieure à celle des bandes transporteuses selon un rapport proportionnel à la longueur de la diagonale considérée comme l'hypoténuse d'un triangle rectangle imaginaire. Cette solution permet de travailler sans devoir maintenir un intervalle régulier entre les articles à transférer, mais nécessite toujours deux transporteurs disposés à angle droit l'un par rapport à l'autre, si on désire obtenir une rotation de 90° de l'article à transférer. Par conséquent, cette solution ne résoud pas le problème de l'encombrement. En outre, si l'on désire exécuter une rotation de 180°, deux systèmes de rotation à 90° en série sont alors nécessaires.

Il a déjà été proposé de faire tourner les découpes dans leur plan en cours de travail, pendant leur transport, permettant ainsi de travailler en ligne droite. A cet effet, on utilise deux organes rotatifs coaxiaux disposés de part et d'autre du plan des découpes, permettant de les pincer et de les faire tourner. Un tel mécanisme pose cependant des problèmes lorsque la découpe comporte déjà certaines parties pliées qui ont alors tendance à se soulever. Or, le passage des organes rotatifs s'oppose à la présence d'éléments de guidage continus destinés à maintenir les parties en position rabattue.

Une solution destinée à remédier à cet inconvénient a été proposée dans le CH-423 446. Les organes destinés à faire tourner les découpes sont constitués par des plaques perforées solidaires du transporteur et reliées sélectivement à une source d'aspiration. Lorsque la plaque passe à l'endroit où la découpe doit subir une rotation dans son plan, elle est reliée à la source d'aspiration, de sorte qu'en tournant, elle entraîne la découpe qui se trouve dessus. Il est donc possible de disposer au-dessus de la trajectoire suivie par les découpes un guide fixe qui maintient les parties pliées en position rabattue.

L'inconvénient de cette solution est d'être relativement compliquée, donc cher. Elle nécessite aussi que les découpes se succèdent avec des espacements constants entre elles.

On a déjà proposé de changer l'orientation d'articles à surfaces de contact planes en utilisant deux transporteurs disposés côte à côte, entraînés chacun séparément à des vitesses différentes, provoquant une rotation des articles en contact simultanément avec les deux transporteurs. Pour pouvoir entraîner deux portions de surfaces de contact d'un même article à des vitesses différentes, il faut évidemment que la masse spécifique des articles transportés soit suffisante pour engendrer entre chaque transporteur et la portion de surface de contact, une force de frottement apte à assurer l'entraînement à une vitesse différente de l'autre portion de cette même surface de contact en prise avec l'autre transporteur. Dans le cas contraire, des glissements aléatoires se produiront et il deviendra impossible de déterminer l'angle de rotation avec un degré de précision suffisant.

Dans le cas des plieuses colleuses pour la fabrication d'articles en papier ou en carton, en particulier pour la fabrication d'emballages, la faible masse spécifique des découpes de plaques de carton ou de feuilles de papier ne permet précisément pas d'utiliser un système à deux transporteurs côte à côte pour faire tourner ces plaques ou ces feuilles autour d'un axe perpendiculaire à leur surface de contact avec le transporteur.

Il a déjà été proposé de changer l'orientation de piles de feuilles en utilisant deux transporteurs parallèles dont l'un est constitué d'une courroie de convoyage, et l'autre de plusieurs courroies de convoyage mises bout à bout, voir US-A-4,807,739. Les vitesses de rotation des deux convoyeurs étant différentes, l'orientation des piles de feuilles transportées peut ainsi en être modifiée et contrôlée par plusieurs cellules photoélectriques placées aux extrémités de deux barrettes disposées dans une certaine direction sous les deux transporteurs. L'occultation des cellules par la face avant des piles de feuilles permet à chaque barrette de déterminer si l'orientation de la pile de feuilles en question est bien correcte. Le cas échéant, un signal est transmis à un contrôleur, qui permettra d'ajuster la vitesse de rotation de la courroie concernée pour modifier en conséquence l'orientation de la pile de feuilles. Au-dessous de chaque courroie se trouve une chambre de dépression reliée à un dispositif d'aspiration permettant d'éviter tout glissement des piles par rapport à la courroie qui les transporte. Le dispositif a l'inconvénient qu'on ne peut pas aligner latéralement les articles à tourner.

Le but de la présente invention est de remédier, au moins en partie, aux inconvénients des solutions susmentionnées, et particulièrement de la dernière.

A cet effet, la présente invention a pour objet un dispositif transporteur à bande ou à rouleaux du type susmentionné caractérisé en ce que lesdits moyens pour changer l'orientation desdits articles peuvent être déplacés transversalement à l'axe de transport dudit dispositif transporteur, voir la partie caractérisante de la revendication 1.

Les avantages résultant de la présente invention résident dans le fait de permettre le positionnement des découpes de papier ou de carton en fonction de leur forme de manière à ce qu'elles soient centrées par rapport à l'axe central d'une machine située en aval dudit dispositif transporteur, après avoir subi un déplacement angulaire une forme d'exécution du dispositif transporteur objet de la présente invention.
La figure 1 est une vue partielle en élévation de ce dispositif transporteur;
La figure 2 est une vue de dessus du dispositif transporteur selon la figure 1;
La figure 3 est une vue en coupe selon la ligne III-III de la figure 1;
La figure 4 est une vue en coupe selon la ligne IV-IV de la figure 1.

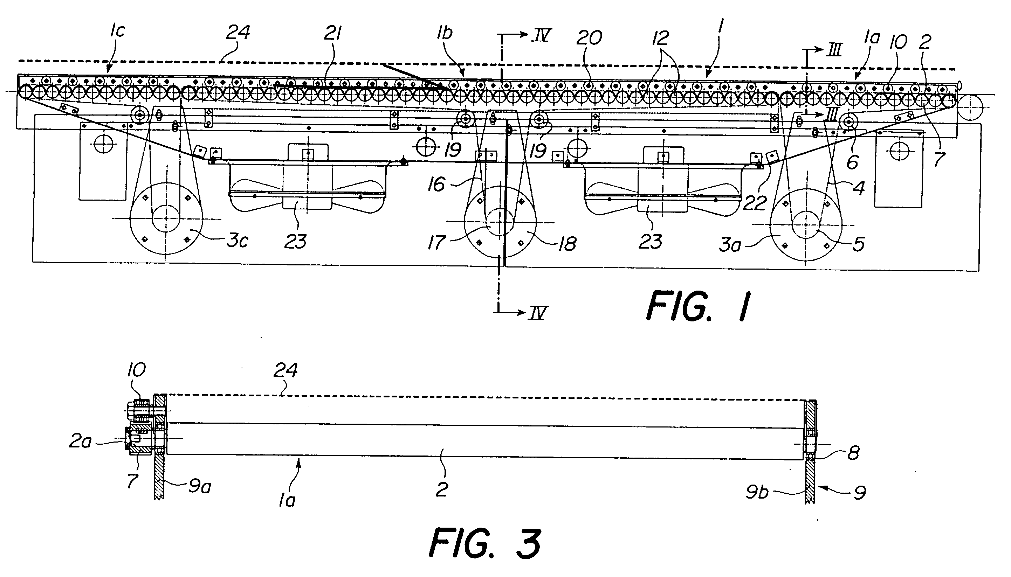

Le dispositif transporteur illustré par les figures 1 à 4 est destiné à être disposé entre deux transporteurs à rouleaux ou à bandes faisant notamment partie d'une machine pour la fabrication d'articles en papier ou en carton, plus particulièrement bien que non exclusivement, d'une plieuse colleuse pour la fabrication d'emballages.

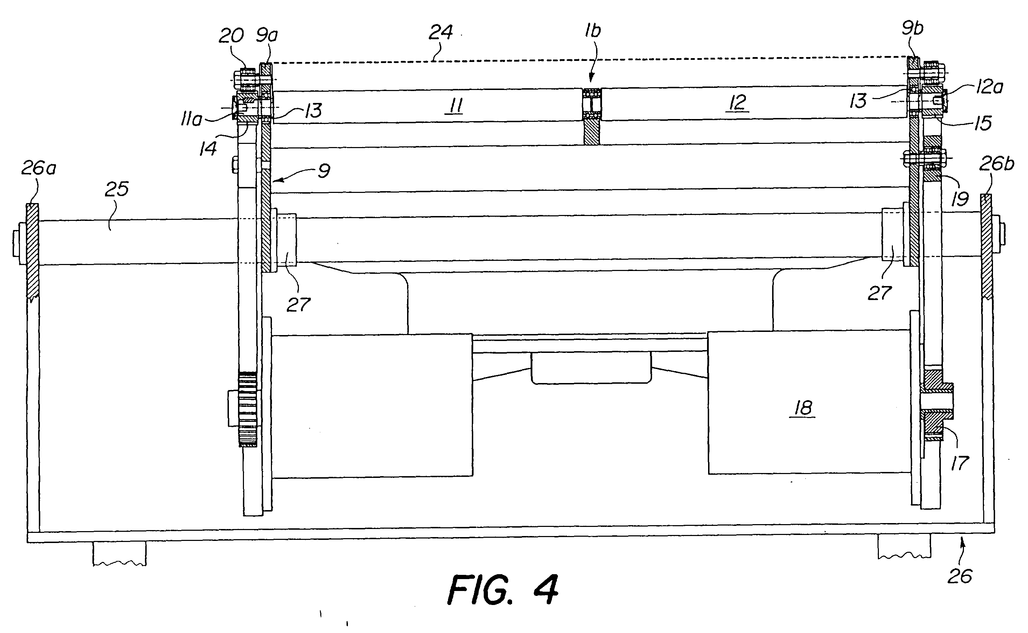

La figure 1 illustre un transporteur à rouleaux 1 selon la présente invention qui comporte deux séries de rouleaux 2 s'étendant sur toute la largeur du transporteur à rouleaux 1 (figure 3) disposées à chaque extrémité de ce transporteur 1 et constituant les sections d'entrée 1a et de sortie 1c du transporteur 1. A noter que, puisque le transporteur 1 est symétrique par rapport à son centre, les sections d'entrée 1 a et de sortie 1c peuvent être inversées en inversant le sens de rotation des rouleaux 2.

Un moteur d'entraînement 3a sert à entraîner les rouleaux 2 de la section d'entrée 1a et un autre moteur d'entraînement 3c sert à entraîner les rouleaux de la section de sortie 1c du transporteur 1. A cet effet, une courroie sans fin 4, de préférence une courroie plate ou crantée, passe sur l'arbre de sortie 5 du moteur 3a, sur un galet tendeur 6 ainsi que sur une série de galets cannelés 7 clavetés ou goupillés sur les arbres des rouleaux 2 pivotés dans des paliers à billes 8 montés dans deux plaques verticales parallèles 9a, 9b formant un châssis 9 portant le dispositif transporteur 1. Des contre-galets 10, pivotés sur les faces externes de chacune des plaques verticales parallèles 9a, 9b de ce châssis 9, servent à assurer un contact efficace entre la courroie crantée 4 et les galets cannelés 7.

Etant donné que le mécanisme d'entraînement de la section de sortie 1c du transporteur 1 par le moteur 1c est identique à celui de la section d'entrée, il n'est pas utile de le décrire à nouveau.

La partie médiane 1b du transporteur 1, illustrée par les figures 1 et 4, comporte deux séries de rouleaux de transport 11 et 12 disposées côte à côte, la longueur de chaque rouleau 11, 12, correspondant sensiblement, de préférence, à la moitié de la largeur du transporteur 1. Chacun de ces rouleaux 11, 12 est pivoté à ses deux extrémités dans des paliers à billes 13 fixés dans les plaques 9a, 9b du châssis 9. Un galet d'entraînement cannelé 14, respectivement 15 est claveté sur un arbre 11a, 12a solidaire de chaque rouleau 11, 12, faisant saillie aux extrémités respectives externes de ces rouleaux 11, 12.

Chaque série de rouleaux 11, 12 comporte un mécanisme d'entraînement indépendant. Etant donné que ces mécanismes sont identiques dans les deux cas, seul l'un d'eux sera décrit. Ce mécanisme d'entraînement comporte une courroie d'entraînement sans fin 16 de préférence une courroie crantée, qui passe autour de l'arbre de sortie cannelé 17 d'un moteur d'entraînement 18, autour d'un galet tendeur 19 et autour du galet cannelé 15 solidaire du rouleau 12 situé à une extrémité de la section médiane 1b du transporteur 1. Ensuite, cette courroie sans fin 16 passe entre les galets 15 et une série de galets presseurs 20 montés pivotant sur le châssis 9. Ce mécanisme d'entraînement est symétrique par rapport au centre de la longueur de la partie médiane 1b du transporteur 1.

Etant donné que chacune des deux séries de rouleaux 11 et 12 disposées côte à côte, de la section médiane 1b du transporteur 1, est entraînée par un mécanisme d'entraînement indépendant dont la vitesse est variable, il est donc possible de faire tourner les rouleaux 11 d'une série à une vitesse différente des rouleaux 12 de l'autre série.

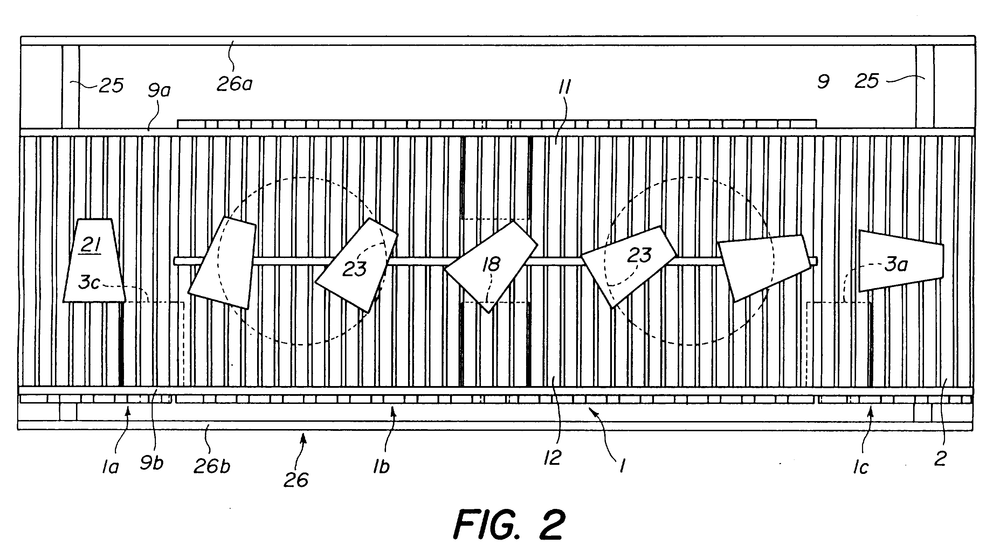

Comme on l'a mentionné précédemment, compte tenu de la faible masse spécifique des feuilles de papier ou des plaques de carton 21 (figure 2) transportées, les forces de frottement entre les surfaces de contact de ces feuilles ou plaques 21 et les deux séries de rouleaux 11 et 12 ne sont pas suffisantes pour permettre aux parties de ces feuilles ou plaques 21 en contact avec les séries de rouleaux 11, respectivement 12, de suivre leurs vitesses respectives différentes et ainsi, d'effectuer un mouvement angulaire contrôlé autour d'un axe perpendiculaire à leur surface de contact avec ces séries de rouleaux 11 et 12.

En vue de créer sur ces découpes de feuilles ou de plaques 21 une pression suffisante pour que la force de frottement entre ces feuilles ou plaques 21 et les deux séries de rouleaux 11 et 12 permette d'entraîner deux parties d'une même feuille ou plaque 21 à des vitesses différentes pour les faire tourner sur elles-mêmes, un caisson 22 (figure 1) est ménagé, dont la surface supérieure est constituée par les rouleaux transporteurs 2, 11 et 12 des trois sections 1a, 1b et 1c du transporteur à rouleaux 1. Un ou plusieurs ventilateurs 23 sont disposés dans le fond du caisson 22. Ces ventilateurs 23 sont destinés à créer une dépression à l'intérieur du caisson 22, permettant d'augmenter la pression de contact entre les feuilles ou plaques de papier ou de carton 21 et les rouleaux de transport 2, 11 et 12. Bien évidemment, la valeur de la pression appliquée sur les feuilles ou plaques de papier ou de carton 21 peut être ajustée en fonction des besoins, en variant la vitesse, déterminant le débit des ventilateurs 23. Il est évident que la solution consistant à utiliser un caisson supérieur relié lui-aussi à un ou plusieurs ventilateurs provoquant une surpression dans le caisson et par là une pression sur feuilles ou plaques de papier ou de carton est également envisageable.

Bien que l'on parle de feuilles de papier ou de plaques de carton pour illustrer des exemples de matériaux à faible masse spécifique, l'invention n'est évidemment pas limitée à ces deux matériaux. On pourrait aussi utiliser le transporteur selon la présente invention pour des plaques de polystyrène expansé ou d'autres matériaux en feuilles ou en plaques de faible masse spécifique.

Grâce à cette pression, on peut garantir que chaque partie de surface d'une feuille ou plaque 21 en contact avec une série de rouleaux 11, respectivement 12, aura une vitesse correspondant sensiblement à celle de la série respective de rouleaux 11, 12 avec laquelle elle est en contact. Compte tenu de la différence de vitesses de ces deux séries de rouleaux 11 et 12, les feuilles ou plaques de papier ou de carton 21 tournent progressivement au fur et à mesure de leur avance sur le transporteur 1, comme illustré par la figure 2. Etant donné que ces rapports de vitesses sont réglables, on peut par exemple faire tourner ces feuilles ou plaques 21 de 90° ou 180°. Suivant la forme de ces feuilles ou plaques 21 on peut choisir à volonté d'autres angles de rotation. On peut évidemment aussi choisir, si nécessaire, le sens de rotation de ces feuilles ou plaques. Suivant la série de rouleaux 11, 12 qui est entraînée plus vite que l'autre, les plaques ou feuilles de carton ou de papier 21 tourneront dans le sens des aiguilles de la montre ou en sens inverse.

Comme on l'a déjà mentionné précédemment, ce dispositif transporteur est destiné plus particulièrement, bien que non exclusivement, à une machine plieuse colleuse pour la fabrication d'articles en papier ou en carton, notamment pour la fabrication d'articles dans le domaine de l'emballage. Dans ce cas, après avoir plié un côté de la plaque 21, on la tourne de 90° ou de 180° pour plier un côté adjacent, respectivement opposé. Afin d'empêcher que le côté fraîchement plié ne se déplie et revienne plus ou moins dans sa position initiale pendant la rotation de la plaque, ce qui poserait des problèmes lors de l'encollage, on peut avantageusement disposer une feuille perforée ou un grillage de retenue 24 à une certaine distance au-dessus des rouleaux 2, 11 et 12 du transporteur 1, parallèlement au plan de ce transporteur 1. Suivant les cas, il est évidemment possible de remplacer la plaque perforée 24 par une série de barres ou par des galets.

Comme on peut le voir en particulier sur les figures 2 à 4, le châssis 9 est de préférence monté coulissant sur des entretoises 25 s'étendant parallèlement les unes aux autres entre deux parois verticales parallèles 26a, 26b d'un bâti 26. Ces entretoises 25 sont constituées par des barres de sections cylindriques qui passent à travers des paliers lisses ou à billes 27 fixés à chacune des plaques 9a, 9b formant le châssis 9. Ces entretoises 25 servent donc à la fois à définir l'écartement entre les parois verticales 26a, 26b du bâti 26 et, en coopération avec les paliers à billes 27, de moyens de guidage entre le châssis mobile 9 et le bâti 26. De préférence, chaque plaque 9a, 9b porte deux paliers à billes 27, les paliers 27 d'une plaque 9a étant alignés avec les paliers respectifs de l'autre plaque parallèle 9b. L'écartement entre les parois parallèles 26a, 26b du bâti 26 est sensiblement plus grand que la largeur hors tout du châssis 9, c'est-à-dire sa largeur à laquelle s'ajoute, de chaque côté des plaques 9a, 9b, la longueur des paliers à billes 27, le châssis 9 est susceptible d'être déplacé latéralement par rapport au bâti 26. Cette possibilité de déplacement du châssis 9 par rapport au bâti 26 est prévue pour permettre de positionner les découpes de papier ou de carton 21 en fonction de leur forme, de manière à ce qu'elles soient centrées par rapport à l'axe central de la machine plieuse colleuse située en aval du dispositif transporteur selon la présente invention, après avoir subi un déplacement angulaire.

En effet, la forme des découpes de papier ou de carton qui sont susceptibles de subir un mouvement angulaire peut être très variée et ces formes peuvent être assez dissymétriques par rapport à leur axe de rotation, de sorte que la découpe peut se trouver sensiblement désaxée latéralement après avoir subi son déplacement angulaire, par rapport à l'axe de déplacement de la machine plieuse colleuse aval. C'est pour permettre de tenir compte de ce décentrage et de le compenser par un déplacement du transporteur 1, que son châssis 9 est monté coulissant latéralement par rapport au bâti 26. Grâce à cette disposition, un simple règlage de la position latérale du châssis 9 permet de recentrer les découpes 21 de papier ou de carton par rapport aux organes de transport de la plieuse colleuse suivante. Il est bien entendu que l'on pourrait également considérer que le châssis 9 ne soit pas monté de façon à coulisser latéralement par rapport au bâti 26 et que dans ce cas de figure, ce soit les organes de transport de la plieuse colleuse suivante qui soient déplacés latéralement en fonction de la position occupée par la découpe de papier ou de carton sur le dispositif transporteur à rouleaux 1.

En variante, il serait aussi possible de remplacer les rouleaux 2, 11 et 12, par des transporteurs à bandes. Celles-ci devraient alors être perforées pour permettre l'application de la dépression sur la surface de contact des feuilles ou plaques 21 avec la bande transporteuse.

## Revendications

1. Dispositif transporteur à rouleaux ou à bande pour articles en feuilles ou en plaques, de faible masse spécifique (21), en papier ou en carton notamment, comprenant des moyens (11, 12) pour changer l'orientation de ces articles (21) autour d'axes perpendiculaires auxdites feuilles ou plaques, lesdits moyens (11, 12) pour changer l'orientation desdits articles (21) comportent deux éléments transporteurs (11, 12) disposés côte à côte le long de la trajectoire desdits articles (21), des moyens d'entraînement distincts à vitesse réglable (18), reliés à chacun desdits éléments transporteurs (11, 12), et des moyens (22, 23) pour appliquer ces articles (21) en direction desdits éléments transporteurs (11, 12) de telle façon que, l'effet de ces moyens (22, 23) s'ajoutant à la masse spécifique de ces articles (21), la force de frottement résultante entre ces éléments transporteurs (11, 12) et ces articles (21) est apte à communiquer à chacune des parties de surfaces desdits articles (21) adjacentes auxdits éléments transporteurs respectifs (11, 12), des vitesses respectives correspondant sensiblement à celles de chacun de ces éléments transporteurs (11, 12), caractérisé en ce qu'il comporte un bâti (26) et des moyens de guidage (25, 27) reliant lesdits éléments transporteurs (11, 12) audit bâti (26) et définissant une trajectoire de déplacement desdits éléments transporteurs (11, 12) par rapport audit bâti dirigée transversalement à l'axe de transport desdits éléments transporteurs (11, 12).

2. Dispositif transporteur selon la revendication 1, caractérisé en ce que lesdits éléments transporteurs (11, 12) constituent une surface supérieure perméable à l'air d'un caisson (22).

3. Utilisation du dispositif transporteur selon l'une des revendications précédentes, dans une ligne de production pour la fabrication d'articles d'emballages notamment par pliage et collage de découpes de papier ou de carton, entre la sortie d'une première plieuse colleuse et l'entrée d'une seconde plieuse colleuse.

4. Utilisation selon la revendication 3, caractérisée en ce que des moyens de maintien (24) des parties pliées desdits articles s'étendent parallèlement au-dessus du dispositif transporteur (1).

5. Utilisation selon la revendication 4, caractérisée en ce que lesdits moyens de maintien (24) sont constitués par un grillage, des galets ou des séries de barres.

## Patentansprüche

1. Rollen- oder Bandfördervorrichtung für blatt- oder scheibenartige Artikel mit geringer spezifischer Masse (21), insbesondere aus Papier oder Karton, umfassend Mittel (11, 12) zum Ändern der Orientierung dieser Artikel (21) um Achsen, die zu den Blättern oder Scheiben orthogonal sind, wobei die Mittel (11, 12) zum Ändern der Orientierung der Artikel (21) zwei nebeneinander entlang der Bahn der Artikel (21) angeordnete Förderelemente (11, 12) umfassen, ferner umfassend getrennte Antriebsmittel mit einstellbarer Geschwindigkeit (18), die jeweils mit einem der Förderelemente (11, 12) verbunden sind, sowie Mittel (22, 23) zum Andrücken dieser Artikel (21) in Richtung der Förderelemente (11, 12) derart, daß sich der Effekt dieser Mittel (22, 23) zur spezifischen Masse dieser Artikel (21) hinzuaddiert und die resultierende Reibungskraft zwischen diesen Förderelementen (11, 12) und diesen Artikeln (21) geeignet ist, jedem der an die jeweiligen Förderelemente (11, 12) angrenzenden Oberflächenbereiche der Artikel (21) jeweilige Geschwindigkeiten zu verleihen, die im wesentlichen jenen des jeweiligen Förderelements (11, 12) entsprechen, **dadurch gekennzeichnet,** daß sie einen Rahmen (26) und Führungsmittel (25, 27) umfaßt, welche die Förderelemente (11, 12) mit dem Rahmen (26) verbinden und eine Bahn für die Verlagerung der Förderelemente (11, 12) bezüglich des Rahmens definieren, welche quer zur Förderachse der Förderelemente (11, 12) gerichtet ist.

2. Fördervorrichtung nach Anspruch 1, **dadurch gekennzeichnet,** daß die Förderelemente (11, 12) eine für die Luft aus einem Senkkasten (22) durchlässige obere Fläche bilden.

3. Verwendung der Fördervorrichtung nach einem der vorhergehenden Ansprüche in einer Fertigungslinie für die Herstellung von Verpackungsartikeln, insbesondere durch Falten und Kleben von Papier- oder Kartonausschnitten, zwischen dem Ausgang einer ersten Falt-Klebvorrichtung und dem Eingang einer zweiten Falt-Klebvorrichtung.

4. Verwendung nach Anspruch 3, **dadurch gekennzeichnet,** daß sich Haltemittel (24) für die gefalteten Bereiche der Artikel parallel über der Fördervorrichtung (1) erstrecken.

5. Verwendung nach Anspruch 4, **dadurch gekennzeichnet,** daß die Haltemittel (24) durch ein Gitter, durch Rollen oder durch Reihen von Stangen gebildet sind.

## Claims

1. A roller or belt conveyor system for articles in sheet or like form, of low specific mass (21), of paper or cardboard in particular, comprising means (11, 12) for changing the orientation of said articles (21) about axes perpendicular to said sheets or the like, said means (11, 12) for changing the orientation of said articles (21) comprise two conveyor elements (11, 12) disposed side by side along the trajectory of said articles (21), separate controllable-speed drive means (18) connected to each of said conveyor elements (11, 12) and means (22, 23) for applying said articles (21) in the direction of saidconveyor elements (11, 12) in such manner that the effect of said means (22, 23) being added to the specific mass of said articles (21), the resultant friction force between said conveyor elements (11, 12) and said articles (21) is adapted to communicate to each of the surface parts of said articles (21) adjacent the said respective conveyor elements (11, 12) respective speeds corresponding substantially to those of each of said conveyor elements (11, 12), characterized in that it comprises a frame (26) and guide means (25, 27)connecting the said conveyor elements (11, 12) to the said frame (26) and defining a trajectory of displacement of said conveyor elements (11, 12) with respect to the said frame (26) directed transversaly to the axis of conveyance of said conveyor elements (11, 12).

2. A conveyor system according to claim 1, characterised in that said conveyor elements (11,12) constitute a top air-permeable surface of a casing (22).

3. Use of the conveyor system according to any one of the preceding claims, in a production line for manufacture of packaging articles, more particularly by folding and gluing of paper or cardboard blanks.

4. Use according to claim 3, characterised in that means (24) for supporting folded parts of said articles extend in parallel relationship above the conveyor system (1).

5. Use according to claim 4, characterised in that the said support means (24) comprise a grille, rollers or series of bars.
